# EUROPEAN PATENT SPECIFICATION

(11) **EP 3 775 008 B1**
(45) Date of publication and mention of the grant of the patent: **01.05.2024**
(21) Application number: 19721387.9
(22) Date of filing: 29.03.2019
(51) Int. Cl.: C08J 9/00, C08L 67/02

(54) **METHOD TO MANUFACTURE A RECYCLED PET-BASED FOAM MATERIAL**
VERFAHREN ZUR HERSTELLUNG EINES SCHAUMSTOFFS AUF DER GRUNDLAGE VON RECYCELTEM PET
PROCÉDÉ DE FABRICATION D'UN MATÉRIAU EN MOUSSE À BASE DE PET RECYCLÉ

(30) Priority: 29.03.2018 IT 201800004069
(43) Date of publication of application: 17.02.2021
(73) Proprietor: Point Plastic S.r.l., 03012 Anagni (FR) (IT)
(72) Inventor: SEVERINI, Tonino, 03012 Anagni (FR) (IT); SEVERINI, Luca, 03012 Anagni (FR) (IT)
(74) Representative: Studio Torta S.p.A.
(86) International application number: PCT/IB2019/052622
(87) International publication number: WO 2019/186499

(56) References cited:
- EP-A1- 2 567 799
- EP-A2- 0 719 626
- DATABASE WPI Week 199646 Thomson Scientific, London, GB; AN 1996-461435 XP002783988, -& JP H08 231750 A (KANEBO LTD) 10 September 1996 (1996-09-10)

## Description

### CROSS-REFERENCE TO RELATED APPLICATIONS

This patent application claims priority from Italian patent application no. 102018000004069 filed on March 29, 2018.

### TECHNICAL FIELD

The present invention concerns a method to manufacture a foam material obtained by the direct use of recycled PET in an extruder.

Here and below by recycled PET we mean PET in the form of flakes e.g. from bottles.

### BACKGROUND ART

For some time now the food and technical packaging industry has been constantly in search of a foam material which, in addition to meeting the requirements for packaging materials, can also meet the needs of recyclability and environmental sustainability, required by law in many of the most advanced countries.

The material most commonly used so far for food packaging is foamed polystyrene. Although foamed polystyrene meets many of the needs of the food packaging sector, for example low density, low costs, possibility of re-using the waste from the production of trays, good mechanical properties and high thermal insulation, it however suffers the serious drawback of not guaranteeing the low environmental impact required. In this regard, in California foamed polystyrene has already been removed from the list of materials that can be used for the packaging of food or other articles, and in the European Community the ban will be introduced as from 2020.

In the packaging industry the need was therefore felt to replace foamed polystyrene with another foam material with the same advantages but which, at the same time, guarantees the required environmental sustainability standards; in particular, the need was felt for a foam material that can be produced with recycled material and which, in turn, can be recycled at the end of its life.

A material which has been considered for some time in the packaging industry is PET. In fact, in addition to bottles, PET packaging is now used also for the production of trays.

The characteristics that make PET an extremely adaptable material for this type of packaging are summarized below:
- low price of raw material;
- efficient recycling circuit almost worldwide (in Europe alone 1,900,000 tons recycled in 2015);
- high availability of material coming from the recycling circuit;
- good balance of thermo-mechanical and aesthetic properties;
- consumers associate PET with recycling.

While PET is already widely used in the packaging industry in a non-foamed form, its use in a foamed form entails a series of problems.

The solutions adopted so far show a series of limitations in terms of productivity and/or do not fully solve some of the essential problems of the production of foamed PET packaging materials.

For example, EP 2383309 B1 describes a process for the production of an article made of foamed PET coming from resin (r-PET) made from bottle waste. In the procedure described in this patent, the bottle waste is processed in a high-speed extruder in the presence of a chemical agent in order to be then melted and thus obtain the above-mentioned resin. The resin produced in this way is then loaded in another extruder where a foaming agent is added to produce the foamed material. The process described above has significant problems relative to preparation of the resin necessary for the foaming process. In fact, preparation of the resin entails costs which make production with recycled material necessarily much more costly than production with virgin material. In EP 2383309 B1 it is clearly stated that it is not possible to produce foamed PET using flakes that have not been previously converted into resin. In particular, the comparison example 2 shows that the use of flakes not converted to resin results in the production of a foamed material with characteristics that make it unsuitable for use in the packaging sector.

The need was therefore felt for a solution that allows the production of quality foamed PET suitable for the packaging sector, using the flakes directly, therefore without having to convert the flakes into resin. In this way an important advantage would be obtained in terms of productivity since the high cost of conversion of the flakes into resin would be cut, thus making the use of recycled PET advantageous and resulting in obvious environmental advantages.

The inventors of the present invention have devised a method that allows the use of recycled PET flakes directly in the extruder, mixing them with a foaming agent and obtaining in the end a foamed material the characteristics of which are such as to satisfy the packaging characteristics of foamed polystyrene.

In particular, the foamed PET produced according to the present invention (in both panel and sheet form) can contain over 50% of bottle flakes and have a final density lower than 200 kg/m³ and a closed cell structure equal to at least 95%.

In the case of sheets, the foam has a crystallinity lower than 10%; and its density is reduced by at least 25% once heated in the thermoforming phase to 120°C for 5 minutes within 7 days from the date of production. In the case of panels, the foam shows a crystallinity higher than 10%.

EP 2567799 A1 describes an extrusion expansion of low molecular weight polyalkylene terephthalates having an IV of below 1.0 dl/g to produce gas-charged beads. The process is comprised of an extrusion expanding of the resins and an underwater pelletizing of the melt threads. The obtained beads show a composite structure and are characterized by an IV of 0.69 dl/g or more and a melt viscosity η₀ of higher than 300 Pa.s.

### DISCLOSURE OF INVENTION

The subject of the present invention is a method to manufacture a foam material which is based on recycled PET in the form of flakes; said method being characterized in that it comprises, in sequence, the steps of;
- crystallization, wherein said flakes are directly subjected to a gas flow at a temperature ranging between 130 and 180°C for a time ranging between 0.2 and 2 h, to give the flakes a degree of crystallization ranging between 10 and 40%; said degree of crystallization being calculated according to ASTM D3418 standard;
- drying, wherein the flakes coming from the crystallization step are subjected to a flow of dry air at a temperature ranging between 100 and 180°C for a time longer than or equal to 3h, to give the flakes a residual humidity below 400 ppm; said residual humidity being calculated according to ASTM D6304 standard;
- mixing, wherein, in an extruder, the flakes coming from the drying step are mixed with both a viscosizing agent and with a foaming agent;
- filtering, wherein the flake-based mixture coming from the mixing step is continuously filtered to remove impurities coming from direct use of the flakes;
- cooling, wherein the flake-based mixture coming from the filtering step undergoes a temperature drop of at least 5°C;
- foaming, wherein the flake-based mixture coming from the cooling step is made to expand;
said cooling step being carried out in an extruder.

In this document the degree of crystallization has been calculated according to the ASTM D 3418 standard; the residual humidity has been calculated according to the ASTM D6304 standard; the percentage of closed cells has been calculated according to the ASM D 6226-15 standard; the intrinsic viscosity has been calculated according to the ASTM D 4603-86 standard; and the density has been calculated according to the ISO 845 standard.

The crystallization and drying steps are extremely important for guaranteeing direct use of the flakes in the mixing step in the extruder and, therefore, for overcoming the preconceptions deriving from the teachings of the known art, which indicates the need to convert the flakes into resin.

Furthermore, the need for a filtering step derives from direct use of the flakes and, therefore, from the need to remove the impurities contained in them.

It has also been shown that the cooling step in the extruder gives the flake-based mixture more suitable viscosity values.

Preferably, the mixing step takes place in an extruder with a screw speed ranging between 10 and 200 rpm; more preferably, the extruder is a twin-screw extruder.

Preferably, the cooling step takes place in an extruder with a screw speed ranging between 5 and 50 rpm; more preferably, the extruder is a single-screw extruder.

Preferably, the viscosizing additive is added in a quantity ranging between 0.05 and 0.8% by weight with respect to the quantity of the flakes and said foaming agent is added in a quantity ranging between 1 and 5% by weight with respect to the quantity of the flakes.

Preferably, the viscosizing additive is an anhydride or epoxy-based tetrafunctional additive.

Preferably, the viscosizing additive is 1H,3H-Benzol[1,2-c:4,5-c']difuran-1,3,5,7-tetrone.

### BEST MODE FOR CARRYING OUT THE INVENTION

For a better understanding of the invention, some illustrative non-limiting examples are given below.

12 recycled PET-based foamed materials were prepared, the first two constituting two comparison examples and the other 10 examples according to the present invention.

The materials used in the examples are identified below:
- "FLAKES" = GROUND BOTTLE FLAKES; Supplier DENTIS; Grade PETALO "A"; IV 0.77 dl/g
- "PET/PE FLAKES" = FLAKES FROM PET/PE BONDED THERMOFORMED SHEET; IV 0.60 dl/g
- "VISCOSIZING ADDITIVE 1": Supplier Point Plastic Srl; Grade KL212 containing 15% of 1H,3H-Benzol[1,2-c:4,5-c']difuran-1,3,5,7-tetrone
- "VISCOSIZING ADDITIVE 2": Supplier Point Plastic Srl; Grade KM212 containing a mixture of 5% of glycidyl amine epoxy resin. Tetrafunctional product based on methylene dianiline with EEW epoxy equivalent: 100-130 g/eq
- "FOAMING AGENT": CYCLOPENTANE

The conditions common to the examples described below, which use a tandem extruder, are summarized as follows:
- the twin-screw extruder operates at a speed of 123 rpm and under the following temperature conditions: T1 260°C/T2 290°C/T3 290°C/T4 289°C/T5 280°C/;
- the filter arranged downstream of the twin-screw extruder operates at a temperature of 280°C, has a mesh of 100 micron and a filtering surface of 100 cm²;
- the single-screw extruder, connected to the twin-screw extruder, operates at a speed of 12 rpm under the following temperature conditions: T1 270°C/T2 270°C/T3 265°C/T4 260°C/T5 255°C/T6 255°C;
- in production of the foamed material in panel form the temperature of the die is 252°C, whereas the size of the die hole is 1.5 mm. The pressure of the polymer in the die varies according to the single example and will be given in Table I;
- in production of the foamed material in sheet form (Ex. 7) the temperature of the die is 252°C, the size of the opening is 0.4 mm and the pressure of the polymer in the die is 99 Bar.

The examples are described below.

### First comparison example

Flakes, not previously subjected to a crystallization and drying step, were placed in a twin-screw extruder, with 40 mm diameter screws, where they were mixed with the viscosizing additive and with the foaming agent.

The flakes used (not subjected to any crystallization and drying step) had a degree of crystallization below 10% and a humidity of 4500 ppm.

By viscosizing additive, we mean a chemical agent able to raise the viscosity of the polymer in the molten state, thus making it suitable for the foaming process. The viscosizing additive considered in the present invention is an anhydride or epoxy-based tetrafunctional additive.

At the end of the twin-screw extruder a filter is positioned which removes any contaminants. Downstream of the filter the polymer/gas mixture is pushed into a secondary single-screw extruder with screw diameter of 60 mm which cools the polymer mixture until obtaining a viscosity of the molten material suitable for the foaming which in this example was performed by means of a flat plate die with 6 rows of 1.5 mm holes. Each row was composed of 25 holes.

The article obtained after calibration is a foamed panel with dimensions of approximately 30 cm width and 4 cm height.

### Second comparison example

The first comparison example was repeated with the difference that before being placed in the twin-screw extruder, the FLAKES were subjected to a crystallization step. For this purpose, the flakes were treated in a crystallizer, agitated and heated with dry air to 140°C and kept in these conditions for approximately 30 minutes. The above crystallization step resulted in a crystallization of 180 of the flakes. The flakes thus crystallized were subjected to the action of a dryer with dry air having DEWPOINT -40°C for 30 minutes at a temperature of 150°C. After the drying process the crystallinity of the flakes and their residual humidity were measured with the following results: 22% crystallization and 790 ppm.

### Example 1

The second comparison example was repeated with the difference that the treatment time of the material in the dryer was 4 hours instead of 30 minutes and the pressure of the polymer in the die was modified as shown in Table I.

### Example 2

Example 1 was repeated with the difference that the concentration of the foaming agent was increased and the pressure of the polymer in the die was modified as shown in Table I.

### Example 3

Example 2 was repeated with the difference that the concentration of the foaming agent and the concentration of the viscosizing agent were increased and the pressure of the polymer in the die was modified as shown in Table I.

### Example 4

Example 3 was repeated with the difference that the concentration of the foaming agent and the concentration of the viscosizing additive were increased and the pressure of the polymer in the die was modified as shown in Table I.

### Example 5

Example 4 was repeated with the difference that a different viscosizing additive was used and the pressure of the polymer in the die was modified as shown in Table I.

### Example 6

Example 5 was repeated with the difference that the concentration of viscosizing additive was increased and the pressure of the polymer in the die was modified as shown in Table II.

### Example 7

Example 1 was repeated with the difference that the foamed material obtained was in the form of a sheet and not a panel.

### Example 8

Example 3 was repeated with the difference that the pressure of the polymer in the die was modified and that a different type of recycled PET was used as shown in Table II.

### Example 9

Example 8 was repeated with the difference that the concentration of viscosizing additive was increased and the pressure of the polymer in the die was modified as shown in Table II.

### Example 10

Example 9 was repeated with the difference that a different viscosizing additive was used with a different concentration and the pressure of the polymer in the die was modified as shown in Table II.

Tables I and II show the conditions of the examples not given in the above description, and the characteristics of the material.

**TABLE I**

| | Comp.Ex.1 | Comp.Ex.2 | Ex.1 | Ex.2 | Ex.3 | Ex.4 |
|---|---|---|---|---|---|---|
| Crystallization % of recycled PET | 0 | 22 | 25 | 23 | 26 | 25 |
| Residual humidity of recycled PET (ppm) | 4500 | 790 | 84 | 88 | 85 | 79 |
| Flow rate of flakes (Kg/h) | 50 | 50 | 50 | 50 | 50 | 50 |
| Flow rate of PET/PE flakes (Kg/h) | -- | -- | -- | -- | -- | -- |
| Flow rate of viscosizing additive 1 (Kg/h) | 2 | 2 | 2 | 2 | 2.2 | 2.3 |
| Flow rate of viscosizing additive 2 (Kg/h) | -- | -- | -- | -- | -- | -- |
| Flow rate of foaming agent (Kg/h) | 1.7 | 1.7 | 1.7 | 2 | 2.5 | 2.8 |
| Pressure of polymer in die (Bar) | 34 | 89 | 99 | 101 | 100 | 102 |

| Characteristics of foamed material obtained | | | | | | |
|---|---|---|---|---|---|---|
| Visual quality | Non foamed | Not good | Excellent | Excellent | Excellent | Excellent |
| Density (Kg/m³) | Not measurable | 221 | 112 | 78 | 62 | 43 |
| % closed cells | Not measurable | 39 | 95 | 98 | 96 | 97 |
| Intrinsic viscosity (dl/g) | 0.798 | 1.02 | 1.12 | 1.10 | 1.23 | 1.28 |

**TABLE II**

| | Ex.5 | Ex.6 | Ex.7 | Ex.8 | Ex.9 | Ex.10 |
|---|---|---|---|---|---|---|
| Crystallization % of recycled PET | 25 | 25 | 25 | 23 | 24 | 25 |
| Residual humidity of recycled PET (ppm) | 79 | 79 | 84 | 65 | 68 | 82 |
| Flow rate of flakes (Kg/h) | 50 | 50 | 50 | -- | -- | -- |
| Flow rate of PET/PE flakes (Kg/h) | -- | -- | -- | 50 | 50 | 50 |
| Flow rate of viscosizing additive 1 (Kg/h) | -- | -- | 2 | 2.2 | 2.5 | -- |
| Flow rate of viscosizing additive 2 (Kg/h) | 2 | 2.5 | -- | -- | -- | 2.0 |
| Flow rate of foaming agent (Kg/h) | 2.8 | 2.8 | 1.7 | 2.5 | 2.5 | 2.5 |
| Pressure of polymer in die (Bar) | 108 | 115 | 99 | 100 | 99 | 112 |

| Characteristics of foamed material obtained | | | | | | |
|---|---|---|---|---|---|---|
| Visual quality | Excellent | Excellent | Excellent | Excellent | Excellent | Excellent |
| Density (Kg/m3) | 39 | 41 | 112 | 63 | 65 | 63 |
| % closed cells | 97 | 97 | 99 | 95 | 94 | 98 |
| Intrinsic viscosity (dl/g) | 1.32 | 1.43 | 1.17 | 1.18 | 1.15 | 1.32 |

The method subject of the present invention is based on crystallization and drying of the recycled PET flakes, on a system for continuous filtering of the melted polymer to simultaneously guarantee excellent removal of the extraneous material and constant pressure on the filter generated by the continuous filtering, a cooling step in the extruder and, lastly, the use of viscosizing additives which raise the viscosity of the polymer in the molten state, making it suitable for the foaming process.

In particular, from the comparison examples it can be clearly seen that the product deriving from recycled PET which does not have the required crystallinity and residual humidity values, does not have the characteristics necessary for its application in the food and technical packaging sector.

From the results relative to the characteristics of the foamed materials shown in Tables I and II, it can be seen that the examples produced with the method according to the present invention are able to guarantee the production of foamed articles, in the form of both panels and thermoformed sheets, with a density ranging between 50-400 kg/m³ and a percentage of closed cells higher than 80.

The possibility of having a product in sheet form allows the manufacture of a multilayer end product with all consequent advantages, especially in the food sector.

To conclude, the method subject of the present invention, without increasing production costs, is able to provide a foamed product for use in the packaging sector starting from a (PET) material which is extremely advantageous due to its high environmental sustainability as described above.

## Claims

1. A method to manufacture a foam material which is based on recycled PET in the form of flakes; said method being **characterized in that** it comprises, in sequence, the steps of;
- crystallization, wherein said flakes are directly subjected to a gas flow at a temperature ranging between 130 and 180°C for a time ranging between 0.2 and 2.0 h, to give the flakes a degree of crystallization ranging between 10 and 40%; said degree of crystallization being calculated according to ASTM D3418 standard;
- drying, wherein the flakes coming from the crystallization step are subjected to a flow of dry air at a temperature ranging between 100 and 180°C for a time longer than or equal to 3 h, to give the flakes a residual humidity below 400 ppm; said residual humidity being calculated according to ASTM D6304 standard;
- mixing, wherein, in an extruder, the flakes coming from the drying step are mixed both with a viscosizing additive and with a foaming agent;
- filtering, wherein the flake-based mixture coming from the mixing step is continuously filtered, to remove impurities coming from direct use of the flakes;
- cooling, wherein the flake-based mixture coming from the filtering step undergoes a drop in temperature of at least 5°C;
- foaming, wherein the flake-based mixture coming from the cooling step is made to expand;
said cooling step being carried out in an extruder.

2. The method according to claim 1, **characterized in that** the flakes coming from the crystallization step are subjected to a flow of dry air at a temperature ranging between 100 and 180°C for a time longer than or equal to 4 h.

3. The method according to one of the preceding claims, **characterized in that** the mixing step is carried out in an extruder at a screw speed ranging between 10 and 200 rpm.

4. The method according to claim 3, **characterized in that** in said mixing step the extruder is a twin-screw extruder.

5. The method according to one of the preceding claims, **characterized in that** the cooling step is carried out in an extruder with a screw speed ranging between 5 and 50 rpm.

6. The method according to claim 5, **characterized in that** in said cooling step the extruder is a single-screw extruder.

7. The method according to one of the preceding claims, **characterized in that** the viscosizing additive is added in a quantity ranging between 0.05 and 0.8% by weight with respect to the quantity of said flakes and said foaming agent is added in a quantity ranging between 1 and 5% by weight with respect to the quantity of said flakes.

8. The method according to one of the preceding claims, **characterized in that** the viscosizing additive is an anhydride or epoxy-based tetrafunctional additive.

9. The method according to claim 8, **characterized in that** the viscosizing additive is 1H,3H-Benzol[1,2-c:4,5-c']difuran-1,3,5,7-tetrone.

## Patentansprüche

1. Ein Verfahren zur Herstellung eines Schaumstoffs auf der Basis von recyceltem PET in Form von Flocken, wobei das Verfahren **dadurch gekennzeichnet ist, dass** es nacheinander die folgenden Schritte aufweist
- Kristallisation, wobei die Flocken direkt einem Gasstrom bei einer Temperatur zwischen 130 und 180°C für eine Zeit zwischen 0,2 und 2,0 h unterworfen werden, um den Flocken einen Kristallisationsgrad zwischen 10 und 40% zu verleihen; wobei der Kristallisationsgrad gemäß der Norm ASTM D3418 ermittelt wird;
- Trocknen, wobei die aus dem Kristallisationsschritt stammenden Flocken einem Strom trockener Luft bei einer Temperatur zwischen 100 und 180°C für eine Zeit von mehr als oder gleich 3 h ausgesetzt werden, um den Flocken eine Restfeuchtigkeit unter 400 ppm zu verleihen; wobei die Restfeuchtigkeit gemäß der Norm ASTM D6304 ermittelt wird;
- Mischen, wobei die aus dem Trocknungsschritt stammenden Flocken in einem Extruder sowohl mit einem viskositätserhöhenden Zusatzstoff als auch mit einem Schaumbildner gemischt werden;
- Filtern, wobei die aus dem Mischschritt kommende Mischung auf Flockenbasis kontinuierlich gefiltert wird, um Verunreinigungen zu entfernen, die aus der direkten Verwendung der Flocken stammen;
- Kühlen, wobei die aus dem Filterschritt kommende Mischung auf Flockenbasis einem Temperaturabfall von mindestens 5°C unterworfen wird;
- Aufschäumen, wobei die aus dem Kühlschritt kommende Mischung auf Flockenbasis zum Expandieren gebracht wird;
wobei der Kühlschritt in einem Extruder durchgeführt wird.

2. Das Verfahren nach Anspruch 1, **dadurch gekennzeichnet, dass** die aus dem Kristallisationsschritt kommenden Flocken einem Strom trockener Luft bei einer Temperatur zwischen 100 und 180°C über einen Zeitraum von mehr als oder gleich 4 h ausgesetzt werden.

3. Das Verfahren nach einem der vorangehenden Ansprüche, **dadurch gekennzeichnet, dass** der Mischschritt in einem Extruder mit einer Schraubendrehzahl zwischen 10 und 200 U/min durchgeführt wird.

4. Das Verfahren nach Anspruch 3, **dadurch gekennzeichnet, dass** der Extruder bei diesem Mischschritt ein Doppelschneckenextruder ist.

5. Das Verfahren nach einem der vorangehenden Ansprüche, **dadurch gekennzeichnet, dass** der Kühlschritt in einem Extruder mit einer Schraubendrehzahl zwischen 5 und 50 U/min durchgeführt wird.

6. Das Verfahren nach Anspruch 5, **dadurch gekennzeichnet, dass** es sich bei dem Extruder in dem Kühlschritt um einen Einschneckenextruder handelt.

7. Das Verfahren nach einem der vorangehenden Ansprüche, **dadurch gekennzeichnet, dass** das Viskositätsadditiv in einer Menge zwischen 0,05 und 0,8 Gew.-%, bezogen auf die Flockenmenge, und das Treibmittel in einer Menge zwischen 1 und 5 Gew.-%, bezogen auf die Flockenmenge, zugesetzt wird.

8. Das Verfahren nach einem der vorangehenden Ansprüche, **dadurch gekennzeichnet, dass** das viskosierende Additiv ein tetrafunktionelles Additiv auf Anhydrid- oder Epoxidbasis ist.

9. Das Verfahren nach Anspruch 8, **dadurch gekennzeichnet, daß** das viskosierende Additiv 1H, 3H-Benzol [ 1 , 2-c : 4 , 5-c' ] difuran- 1,3,5, 7-tetrone ist.

## Revendications

1. Procédé pour fabriquer un matériau en mousse qui est basé sur du PET recyclé sous la forme de flocons ; ledit procédé étant **caractérisé en ce qu'**il comprend, en séquence, les étapes de ;
- cristallisation, dans laquelle lesdits flocons sont directement soumis à un courant de gaz à une température variant entre 130 et 180 °C pendant une durée variant entre 0,2 et 2,0 h, pour donner aux flocons un degré de cristallisation variant entre 10 et 40 % ; ledit degré de cristallisation étant calculé selon la norme ASTM D3418 ;
- séchage, dans laquelle les flocons provenant de l'étape de cristallisation sont soumis à un courant d'air sec à une température variant entre 100 et 180 °C pendant une durée supérieure ou égale à 3 h, pour donner aux flocons une humidité résiduelle inférieure à 400 ppm ; ladite humidité résiduelle étant calculée selon la norme ASTM D6304 ;
- mélange, dans laquelle, dans une extrudeuse, les flocons provenant de l'étape de séchage sont mélangés à la fois avec un additif conférant de la viscosité et avec un agent moussant ;
- filtration, dans laquelle le mélange à base de flocons provenant de l'étape de mélange est filtré en continu, pour éliminer des impuretés provenant de l'utilisation directe des flocons ;
- refroidissement, dans laquelle le mélange à base de flocons provenant de l'étape de filtration subit une chute de température d'au moins 5 °C ;
- moussage, dans laquelle le mélange à base de flocons provenant de l'étape de refroidissement est amené à s'expanser ;
ladite étape de refroidissement étant effectuée dans une extrudeuse.

2. Procédé selon la revendication 1, **caractérisé en ce que** les flocons provenant de l'étape de cristallisation sont soumis à un courant d'air sec à une température variant entre 100 et 180 °C pendant une durée supérieure ou égale à 4 h.

3. Procédé selon l'une des revendications précédentes, **caractérisé en ce que** l'étape de mélange est effectuée dans une extrudeuse à une vitesse de vis variant entre 10 et 200 tr/min.

4. Procédé selon la revendication 3, **caractérisé en ce que**, dans ladite étape de mélange, l'extrudeuse est une extrudeuse à double vis.

5. Procédé selon l'une des revendications précédentes, **caractérisé en ce que** l'étape de refroidissement est effectuée dans une extrudeuse avec une vitesse de vis variant entre 5 et 50 tr/min.

6. Procédé selon la revendication 5, **caractérisé en ce que**, dans ladite étape de refroidissement, l'extrudeuse est une extrudeuse à vis unique.

7. Procédé selon l'une des revendications précédentes, **caractérisé en ce que** l'additif conférant de la viscosité est ajouté dans une quantité variant entre 0,05 et 0,8 % en poids par rapport à la quantité desdits flocons et ledit agent moussant est ajouté dans une quantité variant entre 1 et 5 % en poids par rapport à la quantité desdits flocons.

8. Procédé selon l'une des revendications précédentes, **caractérisé en ce que** l'additif conférant de la viscosité est un additif tétrafonctionnel à base d'anhydride ou d'époxy.

9. Procédé selon la revendication 8, **caractérisé en ce que** l'additif conférant de la viscosité est le 1H,3H-Benzol[1,2-c:4,5-c']difuran-1,3,5,7-tétrone.
